# FASCICULE DE BREVET EUROPEEN

(11) **EP 0 691 261 B1**
(45) Date de publication et mention de la délivrance du brevet: **10.09.1997**
(21) Numéro de dépôt: 95401429.6
(22) Date de dépôt: 16.06.1995
(51) Int. Cl.: B62D 65/00

(54) **Dispositif de manutention d'une charge, notamment d'une caisse de véhicule automobile**
Vorrichtung zur Handhabung einer Last, insbesondere einer Kraftfahrzeugkarosserie
Device for the handling of a load, especially a body of a motor vehicle

(30) Priorité: 06.07.1994 FR 9408355
(43) Date de publication de la demande: 10.01.1996
(73) Titulaire: AUTOMOBILES PEUGEOT, 75116 Paris (FR); AUTOMOBILES CITROEN, 92200 Neuilly-sur-Seine (FR)
(72) Inventeur: Rodron, Jean-Claude, F-78330 Fontenay le Fleury (FR)
(74) Mandataire: Polus, Camille

(56) Documents cités:
- DE-A- 4 209 115
- DE-U- 9 004 814

## Description

La présente invention concerne un dispositif de manutention d'une charge.

Elle s'applique en particulier à la manutention de caisses de véhicule automobile dans des chaînes de montage.

Il est connu de déplacer les caisses de véhicule automobile entre les postes d'une chaîne de montage au moyen de luges sur lesquelles sont accrochées les caisses. Ces luges sont déplaçables en translation le long de trajets de manutention délimités par des chemins à rouleaux.

Il est également connu de retourner les caisses à un poste fixe de la chaîne pour faciliter l'accès à certaines parties de la caisse, par exemple au plancher de cette caisse.

Un dispositif de retournement d'une caisse de véhicule automobile, à poste fixe, est décrit par exemple dans FR-A-2 276 245.

DE-U-90 04 814 décrit un dispositif de manutention d'une charge, du type comprenant un chariot de transport de la charge, comportant une embase déplaçable en translation le long d'un trajet de manutention, et une ossature de forme générale cylindrique, sur laquelle la charge est destinée à être accrochée, montée rotative autour de son axe sur l'embase.

L'invention a pour but de déplacer une caisse de véhicule automobile, d'une part en translation le long d'un trajet de manutention dans une chaîne de montage, et d'autre part, en rotation autour d'un axe longitudinal, les déplacements en translation et en rotation de la caisse s'effectuant de façon indépendante.

A cet effet l'invention a pour objet un dispositif de manutention d'une charge, du type précité, caractérisé en ce que l'ossature forme un tonneau d'un seul tenant, le dispositif de manutention comportant de plus des premiers moyens d'entraînement de l'embase et des seconds moyens d'entraînement du tonneau, les premiers et seconds moyens d'entraînement étant activés indépendamment les uns des autres de manière à permettre des déplacements indépendants, respectivement en translation et en rotation, de la charge portée par le tonneau.

Suivant des caractéristiques de différents modes de réalisation de l'invention :
- les premiers moyens d'entraînement comprennent un transporteur formant chemin roulant, délimitant le trajet de manutention et coopérant par contact avec des patins longitudinaux de l'embase ;
- les seconds moyens d'entraînement comprennent une chaîne sans fin d'entraînement en rotation du tonneau, s'étendant le long d'au moins une partie du trajet de manutention, destinée à coopérer avec un pignon d'entraînement porté par le chariot et couplé avec le tonneau ;
- la chaîne d'entraînement est couplée avec le boîtier d'un différentiel dont les deux planétaires sont couplés, respectivement, à un moteur d'entraînement du transporteur pour chariot et à un moteur d'entraînement de la chaîne d'entraînement, de manière que, lorsque le moteur d'entraînement de la chaîne est à l'arrêt, les vitesses de déplacement du transporteur et de la chaîne soient identiques ;
- le transporteur pour chariot et la chaîne d'entraînement sont couplés, respectivement, avec deux moteurs d'entraînement, par des moyens séparés ;
- le pignon d'entraînement est couplé avec le tonneau par des moyens de liaison débrayables ;
- les moyens de liaison sont sollicités élastiquement en position embrayée ;
- le dispositif comporte des moyens amont de débrayage des moyens de liaison, destinés à être actionnés lorsque le chariot est à une extrémité amont du trajet de la chaîne d'entraînement, préalablement à l'engrènement du pignon d'entraînement avec la chaîne ;
- les moyens amont de débrayage comprennent un organe de commande relié aux moyens de liaison par une tringlerie, déplaçable, par coopération avec une came amont fixe disposée à l'extrémité amont du trajet de la chaîne, depuis une position d'embrayage des moyens de liaison, vers laquelle il est sollicité élastiquement, vers une position de débrayage des moyens de liaison ;
- le dispositif comporte des moyens de verrouillage des moyens de liaison, sélectivement en position embrayée et en position débrayée ;
- le dispositif comporte des moyens amont d'embrayage des moyens de liaison, destinés à être actionnés lorsque le chariot est à une extrémité amont du trajet de la chaîne d'entraînement et à la suite de l'engrènement à vide du pignon d'entraînement avec la chaîne ;
- les moyens amont d'embrayage comprennent un organe de commande relié aux moyens de liaison, déplaçable, par coopération avec une came amont fixe disposée à l'extrémité amont du trajet de la chaîne d'entraînement, depuis une position de débrayage des moyens de liaison, vers une position d'embrayage de ces moyens de liaison, dans laquelle ils sont maintenus par les moyens de verrouillage ;
- la came amont est déplaçable entre une position active dans laquelle elle est destinée à coopérer avec l'organe de commande, et une position escamotée dans laquelle elle est écartée de l'organe de commande, si bien que le tonneau n'est pas entraîné en rotation entre les extrémités amont et aval du trajet de la chaîne d'entraînement ;
- le dispositif comporte des moyens de détection de la présence d'une charge sur le chariot commandant l'escamotage de la came amont lorsque le chariot est vide;
- le dispositif comporte des moyens aval de débrayage des moyens de liaison, destinés à être actionnés lorsque le chariot est à une extrémité aval du trajet de la chaîne d'entraînement, le tonneau étant dans une position angulaire prédéterminée ;
- les moyens aval de débrayage comprennent un levier de commande relié aux moyens de liaison par une tringlerie, déplaçable, par coopération avec une butée d'arrêt en rotation du tonneau, solidaire de ce tonneau, depuis une position d'embrayage des moyens de liaison, vers une position de débrayage de ces moyens de liaison, et un organe d'escamotage du levier, déplaçable, par coopération avec une came aval fixe disposée à une extrémité aval du trajet de la chaîne d'entraînement, depuis une position d'écartement du levier de la trajectoire décrite par la butée lorsque le tonneau tourne, vers laquelle l'organe d'escamotage est sollicité élastiquement, vers une position d'intersection du levier et de cette trajectoire ;
- les seconds moyens d'entraînement comprennent un moteur porté par le chariot, des contacts électriques portés par le chariot étant destinés à glisser le long de rails fixes conducteurs de manière à alimenter électriquement le moteur et à transmettre des informations de commande de ce moteur et d'arrêt du tonneau dans une position angulaire prédéterminée ;
- le dispositif comporte des moyens de blocage du tonneau dans une position angulaire prédéterminée ;
- les moyens de blocage comprennent des moyens complémentaires de verrouillage portés par le tonneau et par une première extrémité d'une tige radiale portée par l'embase, la seconde extrémité de la tige coopérant avec le contour d'un excentrique rotatif vers lequel cette seconde extrémité est rappelée élastiquement, de manière à déplacer la tige entre une position active de verrouillage du tonneau et une position escamotée de libération du tonneau, le point P du contour de l'excentrique le plus éloigné de l'axe de rotation de ce dernier étant, lorsque la tige est dans sa position de verrouillage, interposé angulairement entre la seconde extrémité de la tige et une butée de fin de course;
- l'excentrique est entraîné en rotation par une crémaillère engrenant avec un pignon solidaire de l'excentrique, la crémaillère étant actionnée dans des sens opposés par un vérin de blocage en rotation du tonneau et par un vérin de libération du tonneau, les deux vérins étant fixes, espacés entre eux le long du trajet de manutention, disposés de part et d'autre des bords latéraux de ce trajet, et destinés à coopérer avec la crémaillère lorsque leur tige est alignée avec cette crémaillère ;
- le tonneau comprend deux couronnes entretoisées, coaxiales longitudinalement, le contour de chaque couronne étant en appui sur deux galets rotatifs portés par l'embase, un châssis formant support pour la charge, solidaire des couronnes, des moyens de chargement/déchargement de la charge sur le support et des moyens d'accrochage de cette charge sur le support ;
- les moyens de chargement/déchargement de la charge comprennent un chemin roulant porté par le support, destiné à coopérer par contact avec les patins d'une luge de manutention sur laquelle est fixée la charge ;
- les moyens de chargement/déchargement de la charge comprennent un chemin roulant disposé à poste fixe sur le trajet de manutention, déplaçable entre une position active sensiblement au niveau du support, dans laquelle le chemin roulant est destiné à coopérer par contact avec les patins d'une luge de manutention sur laquelle est fixée la charge, et une position d'attente écartée du support ;
- les moyens d'accrochage de la charge sur le support comprennent des moyens de blocage des patins de la luge sur le support ;
- la charge comprend une caisse de véhicule automobile, le trajet de manutention étant agencé dans une ligne de fabrication de ce véhicule ;
- la partie du trajet de manutention dans laquelle s'étend la chaîne d'entraînement en rotation du tonneau est agencée à l'intérieur d'une étuve.

L'invention sera mieux comprise à la lecture de la description qui va suivre donnée uniquement à titre d'exemple, pour la compréhension de laquelle on se référera aux dessins annexés dans lesquels :
- la figure 1 est une vue en perspective d'un chariot de transport d'une charge d'un dispositif de manutention selon l'invention ;
- la figure 2 est une vue partielle, similaire à la figure 1, montrant une variante de réalisation du chemin roulant d'entraînement de l'embase du chariot ;
- la figure 3 est une vue en perspective éclatée d'un chariot similaire à celui de la figure 1 comportant des moyens de chargement/déchargement de la charge selon une variante de réalisation ;
- la figure 4 est une vue schématique des moyens d'entraînement du transporteur pour chariot et des moyens d'entraînement de la chaîne d'entraînement en rotation du tonneau ;
- la figure 5 est une vue similaire à la figure 4 montrant une variante de réalisation de ces moyens d'entraînement ;
- la figure 6 est une vue schématique en élévation de la partie du trajet de manutention dans laquelle s'étend la chaîne d'entraînement en rotation du tonneau;
- les figures 7 et 8 sont des vues schématiques des moyens amont et aval d'embrayage et de débrayage des moyens de liaison du pignon d'entraînement du tonneau, selon différentes positions de ces moyens ;
- les figures 9 et 10 sont des vues schématiques des moyens de blocage du tonneau dans une position angulaire prédéterminée, selon deux positions de ces moyens respectivement ;
- la figure 11 est une vue schématique en élévation d'une chaîne de montage de véhicule automobile dans laquelle est agencé un dispositif de manutention selon l'invention ;
- la figure 12 est une vue similaire à la figure 6, montrant une variante de réalisation de la came amont;
- la figure 13 est une vue similaire aux figures 7 et 8 montrant une variante de réalisation des moyens amont et aval d'embrayage et de débrayage des moyens de liaison du pignon d'entraînement ;
- la figure 14 est une vue similaire à la figure 1 montrant une variante de réalisation des moyens d'entraînement en rotation du tonneau ;
- la figure 15 est une vue en coupe transversale du chariot de la figure 14, disposé à l'intérieur d'une étuve.

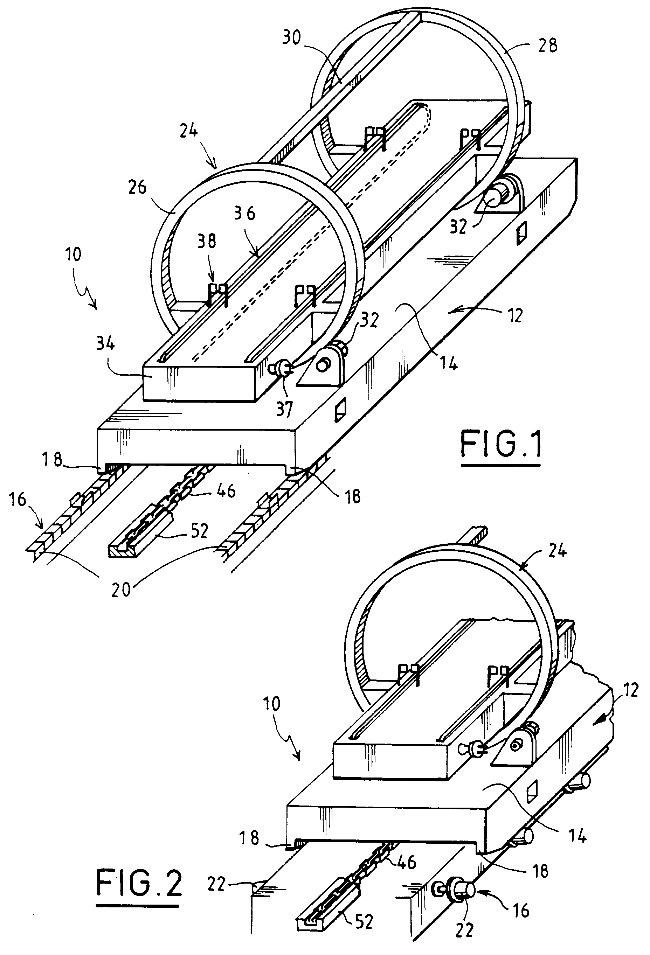

On a représenté à la figure 1 un dispositif de manutention d'une charge, selon l'invention, désigné par la référence générale 10.

Dans l'exemple illustré, le dispositif 10 est destiné à transporter une caisse de véhicule automobile le long d'une ligne de fabrication du véhicule.

Pour des raisons de clarté, la caisse n'est pas représentée sur cette figure.

Le dispositif 10 comporte un chariot 12 de transport de la caisse, muni d'une embase 14 entraînée en translation par un transporteur 16 formant chemin roulant, délimitant un trajet de manutention de la caisse, et coopérant par contact avec des patins longitudinaux 18 solidaires de l'embase 14.

Le chemin roulant est de type connu, par exemple du type à chaînes 20 (une chaîne 20 coopérant avec chaque patin 18), comme cela est représenté à la figure 1, ou du type à rouleaux 22, comme cela est représenté sur la figure 2.

Le chariot 12 comporte de plus une ossature 24, de forme générale cylindrique, formant tonneau, sur laquelle la caisse est destinée à être accrochée, montée rotative autour de son axe longitudinal sur l'embase 14.

Le tonneau 24 comprend deux couronnes 26,28 entretoisées par des longerons 30, coaxiales à l'axe longitudinal de rotation du tonneau. Le contour de chaque couronne 26,28 est en appui sur deux galets axiaux rotatifs 32 portés par l'embase 14.

Le tonneau 24 comprend de plus un châssis 34, formant support de la caisse, solidaire des couronnes 24,28, des moyens 36 de chargement/déchargement de la caisse sur le support 34 et des moyens 38 d'accrochage de la caisse sur ce support 34.

Les moyens de chargement/déchargement de la caisse sur le support 34 représentés sur la figure 1 comprennent un chemin roulant 36, de type connu, par exemple du type à chaînes. Ce chemin roulant 36 est porté par le support 34 et est destiné à coopérer par contact avec les patins d'une luge de manutention classique sur laquelle est fixée la caisse provenant d'un chemin roulant voisin.

Le chemin roulant 36 est entraîné par un moteur, non représenté sur les figures, disposé à un poste fixe où s'effectue le chargement de la caisse sur le chariot ou le déchargement de cette caisse. Le moteur d'entraînement est couplé avec le chemin roulant 36 par des moyens classiques 37, par exemple du type à crabots.

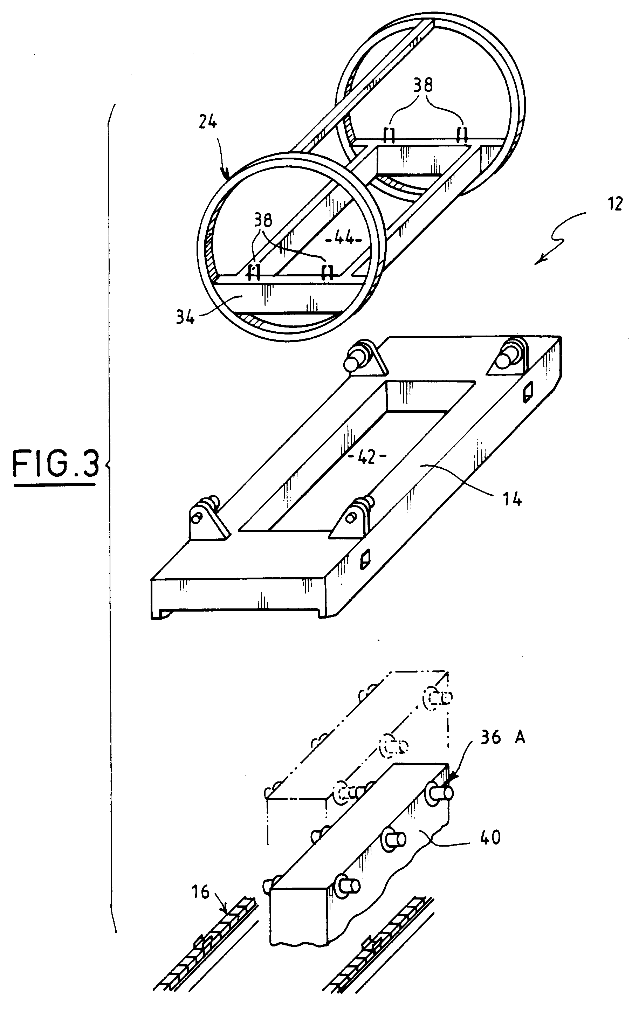

Sur la figure 3, on a représenté une variante de réalisation des moyens de chargement/déchargement de la caisse sur le support 34. Dans ce cas, les moyens de chargement/déchargement comprennent un chemin roulant 36A de type connu, par exemple du type à rouleaux, disposé à poste fixe sur le trajet de manutention de la caisse.

Le chemin roulant 36A est porté par un bloc de roulement 40 déplaçable entre une position d'attente écartée du support 34, comme cela est représenté en trait plein à la figure 3, et une position active, rapprochée du support 34, comme cela est représenté en trait mixte sur la figure 3. Dans cette dernière position, le bloc de roulement 40 s'étend à travers une ouverture centrale 42 délimitée dans l'embase 14 et une ouverture centrale 44 délimitée dans le support 34 du tonneau 24. De cette façon, le chemin roulant 36A est sensiblement au niveau du support 34 de manière à pouvoir coopérer par contact avec les patins de la luge de manutention sur laquelle est fixée la caisse provenant d'un chemin roulant voisin.

Le chemin roulant 36A est entraîné de façon connue en soi par un moteur porté par le bloc de roulement 40.

Les moyens d'accrochage de la caisse sur le support 34 comprenent, de préférence, comme représenté sur les figures 1 à 3, des moyens 38 de blocage des patins de la luge portant la caisse sur le support 34. Ces moyens de blocage 38 sont de type connu, par exemple du type à étriers de serrage, et ne seront pas décrits plus en détail.

Le tonneau 24 est entraîné en rotation au moyen d'une chaîne d'entraînement sans fin 46, de type classique, s'étendant le long d'au moins une partie du trajet de manutention, comme on peut le voir en particulier sur les figures 1, 2 et 6.

Sur cette dernière figure, on voit que la chaîne 46 est portée de façon connue en soi par un tourteau d'entraînement 48 et un tourteau de renvoi 50.

Le brin menant 46A de la chaîne d'entraînement 46 est guidé par un rail 52 de section transversale en U, qui est représenté plus en détail aux figures 1 et 2.

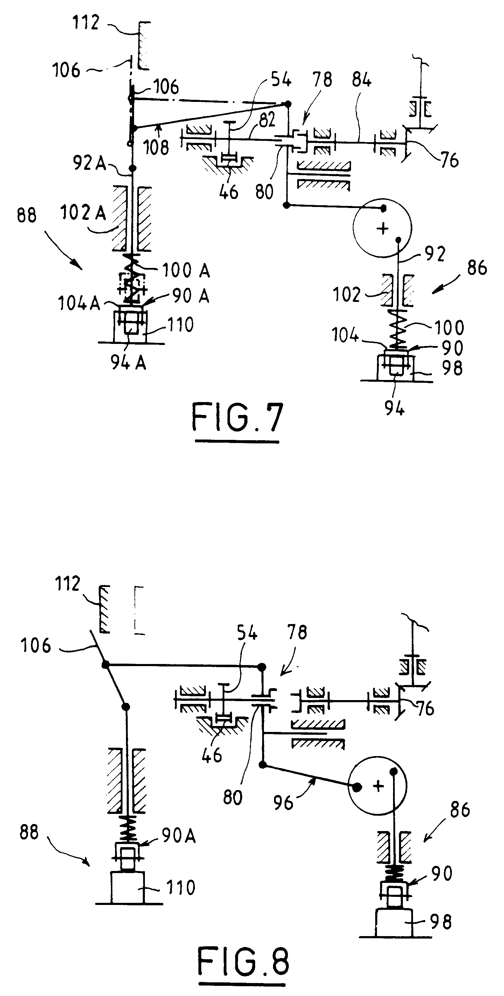

Le brin menant 46A est destiné à coopérer avec un pignon d'entraînement 54, représenté aux figures 7 et 8, porté par l'embase 14 et couplé de façon connue en soi avec au moins un galet 32 d'entraînement en rotation du tonneau 24.

La chaîne 46 s'étend parallèlement à la direction de déplacement du chemin roulant 16. Cependant, afin de remédier à un éventuel défaut de parallélisme entre la chaîne 46 et la direction de déplacement du chemin roulant 16, il est souhaitable de monter le pignon d'entraînement 54 sur un bras articulé porté par l'embase 14, ce bras étant sollicité élastiquement de manière à maintenir le pignon d'entraînement 54 en appui contre la chaîne 46.

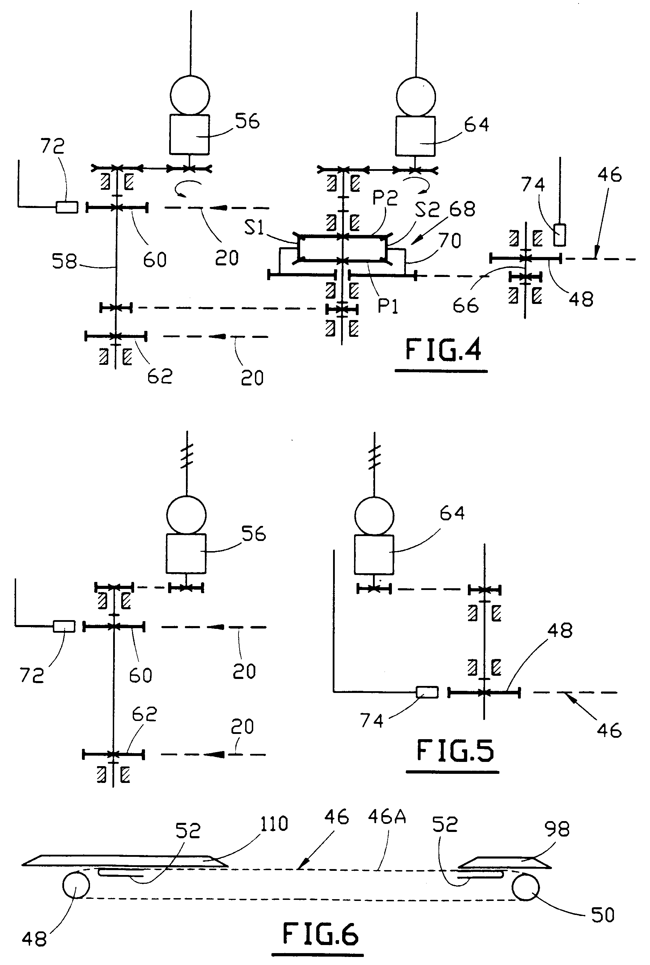

Sur la figure 4, on a représenté des moyens d'entraînement du chemin roulant 16 représenté sur la figure 1 et des moyens d'entraînement de la chaîne sans fin 46.

Le chemin roulant 16 est entraîné par un groupe moteur 56 couplé avec un arbre 58 portant deux tourteaux 60,62 entraînant chacun une chaîne 20 du chemin roulant 16.

La chaîne 46 est entraînée par un groupe moteur 64 couplé avec un arbre 66 portant le tourteau d'entraînement 48 de la chaîne 46, par l'intermédiaire d'un différentiel 68.

Le différentiel 68 comporte de façon classique deux planétaires P1,P2 et deux satellites S1,S2 portés par un boîtier 70 formant porte-satellites.

La chaîne d'entraînement 46 est couplée, par l'intermédiaire de l'arbre 66, avec le boîtier 70.

Un premier planétaire P1 est couplé, par l'intermédiaire de l'arbre 58, avec le groupe moteur 56 d'entraînement du chemin roulant 16.

Le second planétaire P2 est couplé avec le groupe moteur 64 d'entraînement de la chaîne sans fin 46.

Le premier planétaire P1 est couplé, de façon connue en soi, avec l'arbre 58 d'entraînement du chemin roulant 16 de manière que le rapport de vitesse du premier planétaire P1 et de l'arbre 58 soit égal à l'unité. L'arbre 66 d'entraînement de la chaîne 46 est couplé, de façon connue en soi, avec le boîtier 70 de manière que le rapport de vitesse entre l'arbre 66 et la boîtier 70 soit égal à deux. Ainsi, lorsque le groupe 56 d'entraînement du chemin roulant 16 est actionné et le groupe 64 d'entraînement de la chaîne 46 est à l'arrêt, cette dernière et le chemin roulant 16 se déplacent à la même vitesse, si bien que le tonneau 24 est immobile en rotation.

Des capteurs 72,74, de type connu, placés respectivement au droit d'un tourteau 60 d'entraînement d'une chaîne 20 du chemin roulant et au droit du tourteau 48 d'entraînement de la chaîne 46 sans fin, permettent de mesurer et de contrôler les vitesses du chemin roulant 16 et de la chaîne d'entraînement 46.

Les groupes moteurs 56,64 sont pilotés par des variateurs de vitesse de type connu. De préférence, on impose une vitesse de la chaîne d'entraînement 46 inférieure ou égale à la vitesse du chemin roulant 16, de manière à éviter une inversion brutale du sens de rotation du tonneau 24 en cas d'arrêt accidentel du chemin roulant 16 ou de la chaîne d'entraînement 46.

Les moyens d'entraînement du chemin roulant 16 et de la chaîne d'entraînement 46 décrits ci-dessus permettent de déplacer le chariot 12 en translation le long du trajet de manutention et de déplacer le tonneau 24 en rotation, les déplacements en translation du chariot et en rotation du tonneau se faisant de façon indépendante, simultanément ou séparément.

En variante, le chemin 16 à chaînes 20 et la chaîne 46 d'entraînement du tonneau peuvent être couplés, respectivement, avec le groupe moteur 56 et avec le groupe moteur 64 par des moyens classiques séparés, comme cela est représenté sur la figure 5.

En se référant aux figures 7 et 8, on voit que le pignon 54 d'entraînement du tonneau 24 est relié à des engrenages 76 de couplage avec le tonneau 24 par des moyens de liaison 78 débrayables, de type connu.

Ces moyens de liaison 78 comprennent des moyens de crabotage comportant deux parties complémentaires portées l'une par un manchon 80 monté coulissant axialement sur un arbre 82 portant le pignon d'entraînement 54 et solidaire en rotation de cet arbre 82, et l'autre par un arbre 84, aligné avec le précédent, relié aux engrenages de couplage 76. Les moyens de liaison 78 sont embrayés ou débrayés par déplacement axial du manchon 80.

Dans l'exemple illustré sur les figures 7 et 8, les moyens de liaison 78 sont sollicités élastiquement en position embrayée.

Le dispositif de manutention 10 comprend également des moyens amont 86 et aval 88 de débrayage des moyens de liaison, qui seront décrits ci-dessous en se référant aux figures 6 à 8.

Les moyens amont 86 de débrayage sont destinés à être actionnés lorsque le chariot 12 est à une extrémité amont du trajet de la chaîne d'entraînement 46 (à droite en considérant la figure 6), préalablement à l'engrènement du pignon d'entraînement 54 avec la chaîne 46.

Les moyens amont 86 de débrayage comprennent un organe de commande 90 comportant une bielle 92 portant à une extrémité un galet 94. L'autre extrémité de la bielle 92 est reliée, de façon connue en soi, au manchon de liaison 80 par l'intermédiaire d'une tringlerie 96.

Le galet 94 est destiné à coopérer avec une came amont fixe longitudinale 98 disposée à l'extrémité amont du trajet de la chaîne 46, de manière à déplacer l'organe de commande 90 et le manchon 80 depuis une position d'embrayage des moyens de liaison 78, telle que représentée sur la figure 7, vers une position de débrayage de ces moyens de liaison 78, telle que représentée sur la figure 8.

Un ressort 100 entourant la bielle 92, interposé entre des moyens fixes 102 de guidage de cette bielle 92 et une chape 104 de support du galet 94, solidaire de la bielle 92, sollicite élastiquement l'organe de commande 90 en position d'embrayage des moyens de liaison 78.

La came amont 98 maintient les moyens de liaison 78 en position débrayée jusqu'à ce que le pignon d'entraînement 54 engrène avec la chaîne 46. En aval de cette came 98, l'organe de commande 90 revient en position d'embrayage des moyens de liaison 78, sous l'effet du ressort de rappel 100.

Les moyens aval 88 de débrayage des moyens de liaison 78 sont destinés à être actionnés lorsque le chariot 12 est à une extrémité aval du trajet de la chaîne d'entraînement 46 (à gauche en considérant la figure 6), le tonneau 24 étant dans une position angulaire prédéterminée.

Les moyens aval 88 de débrayage comprennent un levier de commande 106 relié, de façon connue en soi, au manchon 80, par une tringlerie 108.

Le levier 106 est articulé en son axe de pivotement sur l'extrémité d'une bielle 92A d'un organe 90A d'escamotage du levier 106, analogue à l'organe de commande 90 décrit précédemment. Les éléments de l'organe d'escamotage 90A analogues à ceux de l'organe de commande 90 sont désignés par des références numériques identiques auxquelles est rajoutée la lettre A.

Le galet 94A de l'organe 90A est destiné à coopérer avec une came aval fixe longitudinale 110 disposée à l'extrémité aval du trajet de la chaîne d'entraînement 46 de manière à déplacer l'organe d'escamotage 90A et le levier 106 depuis une première position représentée en trait plein sur la figure 7, vers laquelle il est sollicité élastiquement par le ressort 100A, vers une seconde position représentée en trait mixte sur la figure 7. Dans cette seconde position, le levier 106 est en travers d'une trajectoire décrite par une butée 112 d'arrêt en rotation du tonneau 24, solidaire de ce tonneau. Le levier 106 est alors destiné à pivoter, par coopération avec la butée d'arrêt 112, depuis une position d'embrayage des moyens de liaison 78, représentée en trait mixte sur la figure 7, vers une position de débrayage de ces moyens de liaison 78, représentée en trait plein sur la figure 8, dans laquelle le tonneau 24 n'est plus entraîné en rotation par la chaîne 46 et est immobilisé dans la position angulaire imposée par la butée d'arrêt 112.

En amont et en aval de la came 110, l'organe 90A est sollicité élastiquement vers sa première position d'escamotage du levier 106 dans laquelle ce dernier est écarté de la trajectoire décrite par la butée d'arrêt 112 lorsque le tonneau 24 tourne.

On notera que le levier 106, relié à l'organe de commande 90 par l'intermédiaire de la tringlerie 108, du manchon 80 et de la tringlerie 96, est sollicité élastiquement en position d'embrayage des moyens de liaison 78 par le ressort 100.

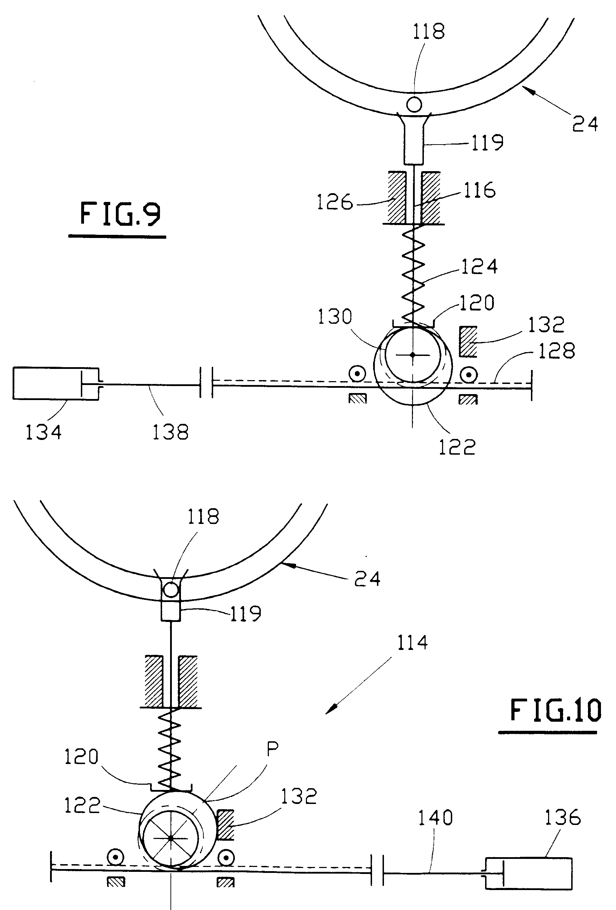

On a représenté sur les figures 9 et 10 des moyens 114 de blocage du tonneau 24 dans la position angulaire prédéterminée imposée par la butée d'arrêt 112.

Les moyens de blocage 114 comprennent des moyens complémentaires de verrouillage, de type connu, portés par le tonneau 24 et par une première extrémité d'une tige 116, s'étendant radialement par rapport au tonneau 24, portée par l'embase 14 du chariot.

Dans l'exemple illustré sur les figures 9 et 10, les moyens complémentaires de verrouillage comprennent un doigt 118, solidaire du tonneau 24, destiné à s'emboîter entre les branches d'une fourche 119 portées par la première extrémité de la tige 116.

La seconde extrémité de la tige 116 est munie d'un organe de contact 120 coopérant avec le contour d'un excentrique rotatif 122 porté par l'embase 14. L'organe de contact 120 est sollicité élastiquement contre l'excentrique 122 au moyen d'un ressort 124, entourant la tige 116, interposé entre des moyens 126 de guidage de la tige 116, solidaires de l'embase 14, et l'organe de contact 120.

L'excentrique 122 est déplaçable en rotation au moyen d'une crémaillère transversale 128, portée par l'embase 14, engrénant avec un pignon 130 solidaire de l'excentrique, entre une position escamotée de la tige 116, telle que représentée sur la figure 9, dans laquelle le tonneau est libre en rotation, et une position active de la tige 116, telle que représentée sur la figure 10, dans laquelle le doigt 118 est emboîté dans la fourche 119 afin de verrouiller le tonneau 24.

De manière à assurer un verrouillage stable du tonneau 24, lorsque la tige 116 est dans sa position de verrouillage, le point P du contour de l'excentrique 122 le plus éloigné de son axe de rotation est interposé angulairement entre le point de contact de l'organe 120 avec l'excentrique et une butée 132 de fin de course angulaire de l'excentrique 122, solidaire de l'embase, coopérant avec le contour de l'excentrique.

De préférence, la crémaillère 128 est actionnée dans des sens opposés par deux vérins fixes 134,136, espacés entre eux le long du trajet de manutention.

Un premier vérin 134 de libération du tonneau 24, représenté sur la figure 9, est disposé en amont de la came amont 98. Le second vérin 136 de blocage en rotation du tonneau 24 est disposé en aval de la came aval 110. Les vérins 134,136 sont disposés transversalement de part et d'autre des bords latéraux du trajet de manutention.

Lorsque la tige 138,140 d'un vérin 134,136 est alignée avec une extrémité correspondante de la crémaillère 128, le vérin 134,136 est actionné de manière que sa tige vienne en contact avec l'extrémité correspondante de la crémaillère 128 et pousse cette dernière dans le sens correspondant.

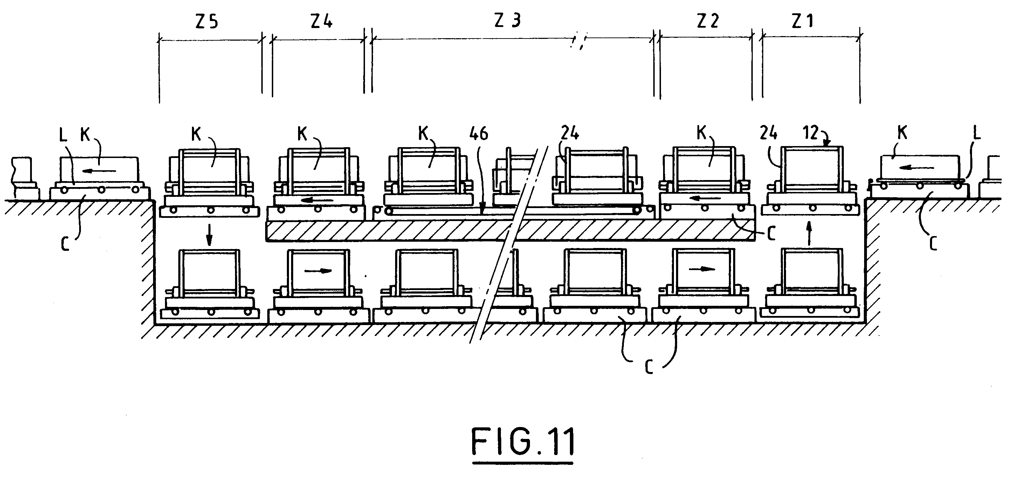

Sur la figure 11, on a représenté une partie d'une chaîne d'assemblage et de montage de véhicule automobile, comportant un dispositif de manutention 10 selon l'invention.

Cette chaîne d'assemblage et de montage comporte une série de chariots 12 tels que celui décrit précédemment, destinés à circuler le long d'un trajet de manutention, délimité par des chemins roulants classiques C, s'étendant sur deux niveaux décalés en hauteur. Les chariots 12 sont déplacés d'un niveau à l'autre à l'aide de moyens de monte et baisse classiques.

La partie supérieure du trajet de manutention comporte cinq zones successives Z1 à Z5, numérotées d'amont en aval, et est interposée entre des chemins roulants classiques du reste de la ligne de fabrication.

Le vérin 134 de libération du tonneau 24 est disposé dans la zone Z2.

La chaîne 46 d'entraînement en rotation du tonneau 24, ainsi que les cames amont 98 et aval 110 sont disposées dans la zone Z3.

Le vérin 136 de blocage en rotation du tonneau 24 est disposé dans la zone Z4.

Dans la zone Z1, on charge sur le chariot 12 une caisse K acheminée par un chemin roulant C voisin, à l'aide des moyens 36 de chargement/déchargement de la caisse sur le chariot.

Dans cette zone Z1, le tonneau 24 du chariot est immobilisée en rotation grâce aux moyens 114 de blocage.

Dans la zone Z2, la caisse K est immobilisée sur le chariot 12 à l'aide des moyens de blocage 38 et le tonneau 24 est libéré par actionnement du vérin 134.

Dans la zone Z3, le pignon d'entraînement 54 est découplé du tonneau 24 par la came amont 98, préalablement à son engrènement avec la chaîne d'entraînement 46, puis est couplé à nouveau avec le tonneau 24. Le chariot 12 est alors déplacé en translation et le tonneau 24 est éventuellement déplacé en rotation selon le cycle prévu. A l'extrémité aval de le zone 3, le tonneau 24 est placé dans sa position prédéterminée grâce à la came aval 110.

Dans la zone Z4, le tonneau est bloqué en rotation par actionnement du vérin 136, et les moyens 38 de blocage de la caisse sont libérés.

Dans la zone Z5, la caisse K est transférée sur un chemin roulant C voisin à l'aide des moyens de chargement/déchargement 36. Le chariot 12 est ensuite renvoyé vers la zone Z1 par descente au niveau inférieur, déplacement le long de ce niveau inférieur, et montée au niveau supérieur dans la zone Z1.

En variante le retour des chariots 12 peut se faire latéralement et au même niveau que celui des matériels des zones Z1 à Z5.

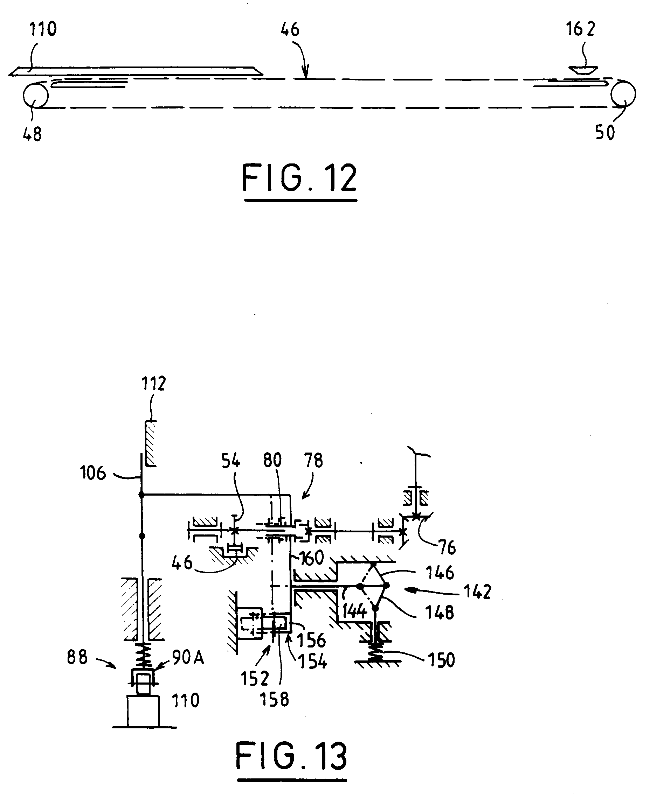

Sur les figures 12 et 13, on a représenté une variante de réalisation des moyens amont et aval d'embrayage et de débrayage des moyens de liaison 78 du pignon d'entraînement 54.

Dans ce cas, le dispositif de manutention 10 comporte des moyens 142, de type connu, de verrouillage des moyens de liaison 78, sélectivement en position embrayée et en position débrayée.

Sur la figure 13, sur laquelle les éléments analogues à ceux de la figure 7 ou 8 sont désignés par des références identiques, on voit que les moyens de verrouillage 142 comprennent, par exemple, une tringle 144 reliée par une première extrémité au manchon 80, et deux biellettes 146,148, comportant chacune une première extrémité articulée sur la seconde extrémité de la tringle 144.

La seconde extrémité d'une première biellette 146 est fixe. La seconde extrémité de la seconde biellette 148 est sollicitée élastiquement, par un ressort 150, vers l'extrémité fixe de la première biellette 146.

Les déplacements de l'extrémité articulée de la tringle 144 de part et d'autre de l'alignement des secondes extrémités des biellettes 146,148 ne peuvent se faire qu'à l'encontre de la force élastique du ressort 150. Cette force élastique maintient donc le manchon 80, auquel est reliée la tringle 144, sélectivement en position de crabotage, telle que représentée en trait plein sur la figure 13, et en position libérée, telle que représentée en trait mixte sur cette figure.

Lorsque le chariot 12 ne circule pas le long du trajet de la chaîne d'entraînement 46, les moyens de liaison 78 sont maintenus en position débrayée par les moyens de verrouillage 142.

Le dispositif de manutention comporte par conséquent, dans le cas de la variante illustrée sur figures 12 et 13, des moyens amont 152 d'embrayage des moyens de liaison 78, destinés à être actionnés lorsque le chariot est à une extrémité amont du trajet de la chaîne d'entraînement 46, à la suite de l'engrènement à vide du pignon d'entraînement 54 avec cette chaîne 46.

Les moyens amont 152 d'embrayage comprennent un organe de commande 154 comportant une chape 156 portant un galet 158. La chape 156 est reliée, de façon connue en soi, au manchon de liaison 80 par l'intermédiaire d'une tringle 160.

Le galet 158 est destiné à coopérer avec une came amont fixe longitudinale 162 disposée à l'extrémité amont du trajet de la chaîne 46, de manière à déplacer l'organe de commande 154 depuis une position de débrayage des moyens de liaison 78, telle que représentée en trait mixte sur la figure 13, vers une position d'embrayage des moyens de liaison 78, telle que représentée en trait plein sur la figure 13, dans laquelle ces moyens de liaison 78 sont maintenus par les moyens de verrouillage 142.

On a également représenté sur la figure 13 des moyens aval de débrayage des moyens de liaison 78, analogues à ceux illustrés sur les figures 7 et 8 et désignés par des références identiques.

Cependant, dans la variante de réalisation des moyens de débrayage et de d'embrayage illustrés sur la figure 13, les moyens de liaison 78 sont maintenus débrayés en aval de la came aval 110.

De préférence, la came amont 162 est déplaçable entre une position active, telle que représentée sur les figures 12 et 13, dans laquelle elle est destinée à coopérer avec l'organe de commande 154, et une position escamotée, non représentée sur les figures, dans laquelle elle est écartée de l'organe de commande 154.

Des moyens de type connu de détection de la présence d'une caisse sur le chariot 12 commandent l'escamotage de la came amont 162 lorsque ce chariot 12 est vide.

Les moyens de liaison 78 sont débrayés lorsque le chariot 12 se présente à l'extrémité amont du trajet de la chaîne 46. Lorsque la came amont 162 est escamotée (en cas d'absence de caisse sur le chariot), les moyens de liaison 78 sont maintenus débrayés le long du trajet de la chaîne 46 si bien que le tonneau 24 n'est pas entraîné en rotation entre les extrémités amont et aval du trajet de la chaîne 46.

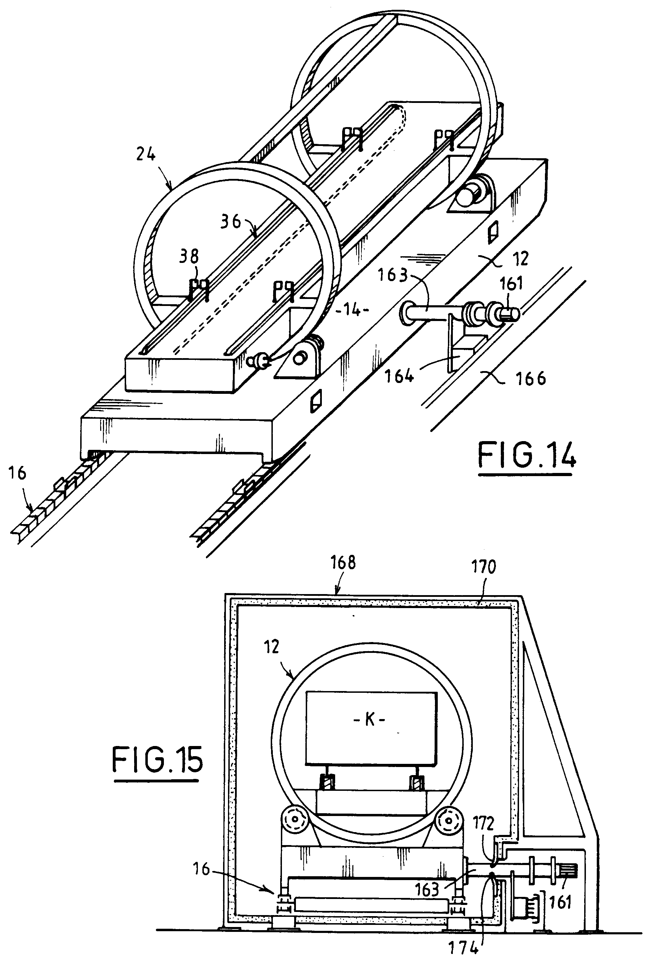

Sur la figure 14, on a représenté une variante de réalisation des moyens d'entraînement en rotation du tonneau 24 du chariot 12.

Dans ce cas, le tonneau 24 est entraîné en rotation au moyen d'un moteur 161 porté par un bras 163 solidaire de l'embase 14.

Des contacts électriques 164, portés par le bras 163, sont destinés à glisser le long de rails fixes conducteurs 166 de manière à alimenter électriquement le moteur 161 et à transmettre des informations de commande de ce moteur.

Dans cette variante, l'ordre de rotation est donné par la détection du passage d'un chariot 12 avec la présence d'une caisse sur celui-ci. Cette détection située en amont se substitue à l'organe de commande 90 et à la came amont 98 représentés aux figures 7 et 8. Les moyens aval 88 de débrayage et de reconnaissance de la position du tonneau représentés aux figures 7 et 8 sont adaptés dans ce cas pour agir non pas sur le manchon 80, mais sur un détecteur embarqué. L'information est transmise électriquement par l'intermédiaire des contacts 164 glissants dans les rails conducteurs 166.

Le moteur 161 d'entraînement en rotation du tonneau 24 et le chemin roulant 16 d'entraînement en translation du chariot 12 sont pilotés de façon indépendante par des moyens connus.

Sur la figure 15, on a représenté le chariot 12 de la figure 14 transportant une caisse de véhicule automobile K dans une étuve 168 à l'intérieur de laquelle s'étend le chemin roulant 16.

L'étuve 168 est destinée par exemple à cuire un revêtement de peinture de la caisse K.

Cette étuve 168 comporte une enceinte 170 calorifugée comportant une ouverture longitudinale 172, traversée par le bras 163, de manière que l'extrémité de ce dernier portant le moteur 161 et les contact électriques 164 s'étende à l'extérieur de l'enceinte 170. Bien entendu, les rails conducteurs 166 sont également disposés à l'extérieur de l'enceinte 170.

Les bords longitudinaux de l'ouverture 172 sont munis de lèvres souples 174, de type connu, assurant une obturation étanche de l'ouverture 172 tout en permettant le passage du bras 163 à travers celle-ci.

L'invention ne se limite pas aux modes de réalisations décrits précédemment.

En particulier, le chemin roulant d'entraînement du chariot 12 peut être remplacé par des moyens de traction de ce chariot ou bien par des roues motrices portées par ce chariot.

De plus, le chariot du dispositif de manutention selon l'invention peut transporter des charges très variées.

L'invention comporte de nombreux avantages.

En particulier, elle permet de déplacer une caisse de véhicule automobile en translation le long d'un trajet de manutention dans une chaîne de montage et en rotation autour d'un axe longitudinal, les déplacements en translation et en rotation de la caisse s'effectuant de façon indépendante.

Par ailleurs, les moyens à chaîne sans fin 46 d'entraînement en rotation du tonneau sont robustes et particulièrement fiables dans les cas d'utilisation du chariot dans une ambiance hostile.

## Revendications

1. Dispositif de manutention d'une charge (K), du type comprenant un chariot (12) de transport de la charge, comportant une embase (14) déplaçable en translation le long d'un trajet de manutention, et une ossature (24) de forme générale cylindrique, sur laquelle la charge est destinée à être accrochée, montée rotative autour de son axe sur l'embase (14), caractérisé en ce que l'ossature forme un tonneau (24) d'un seul tenant, le dispositif de manutention comportant de plus des premiers moyens (16,18) d'entraînement de l'embase (14) et des seconds moyens (46,54;161) d'entraînement du tonneau (24), les premiers et seconds moyens d'entraînement étant activés indépendamment les uns des autres de manière à permettre des déplacements indépendants, respectivement en translation et en rotation, de la charge (K) portée par le tonneau (24).

2. Dispositif selon la revendication 1, caractérisé en ce que les premiers moyens d'entraînement comprennent un transporteur (16) formant chemin roulant, délimitant le trajet de manutention et coopérant par contact avec des patins longitudinaux (18) de l'embase (14).

3. Dispositif selon la revendication 1 ou 2, caractérisé en ce que les seconds moyens d'entraînement comprennent une chaîne sans fin (46) d'entraînement en rotation du tonneau, s'étendant le long d'au moins une partie du trajet de manutention, destinée à coopérer avec un pignon d'entraînement (54) porté par le chariot (12) et couplé avec le tonneau (24).

4. Dispositif selon les revendications 2 et 3 prises ensemble, caractérisé en ce que la chaîne d'entraînement (46) est couplée avec le boîtier (70) d'un différentiel (68) dont les deux planétaires (P1,P2) sont couplés, respectivement, à un moteur (56) d'entraînement du transporteur (16) pour chariot et à un moteur (64) d'entraînement de la chaîne d'entraînement (46), de manière que, lorsque le moteur (64) d'entraînement de la chaîne (46) est à l'arrêt, les vitesses de déplacement du transporteur (16) et de la chaîne (46) soient identiques.

5. Dispositif selon les revendications 2 et 3 prises ensemble, caractérisé en ce que le transporteur pour chariot et la chaîne d'entraînement (46) sont couplés, respectivement, avec deux moteurs d'entraînement (56,64), par des moyens séparés.

6. Dispositif selon l'une quelconque des revendications 3 à 5, caractérisé en ce que le pignon d'entraînement (54) est couplé avec le tonneau (24) par des moyens de liaison (78) débrayables.

7. Dispositif selon la revendication 6, caractérisé en ce que les moyens de liaison (78) sont sollicités élastiquement en position embrayée.

8. Dispositif selon la revendication 7, caractérisé en ce qu'il comporte des moyens amont (86) de débrayage des moyens de liaison (78), destinés à être actionnés lorsque le chariot (12) est à une extrémité amont du trajet de la chaîne d'entraînement (46), préalablement à l'engrènement du pignon d'entraînement (54) avec la chaîne (46).

9. Dispositif selon la revendication 8, caractérisé en ce que les moyens amont (86) de débrayage comprennent un organe de commande (90) relié aux moyens de liaison (78) par une tringlerie (96), déplaçable, par coopération avec une came amont fixe (98) disposée à l'extrémité amont du trajet de la chaîne (46), depuis une position d'embrayage des moyens de liaison (78), vers laquelle il est sollicité élastiquement, vers une position de débrayage des moyens de liaison (78).

10. Dispositif selon la revendication 6, caractérisé en ce qu'il comporte des moyens (142) de verrouillage des moyens de liaison (78), sélectivement en position embrayée et en position débrayée.

11. Dispositif selon la revendication 10, caractérisé en ce qu'il comporte des moyens amont (152) d'embrayage des moyens de liaison (78), destinés à être actionnés lorsque le chariot (12) est à une extrémité amont du trajet de la chaîne d'entraînement (46) et à la suite de l'engrènement à vide du pignon d'entraînement (54) avec la chaîne (46).

12. Dispositif selon la revendication 11, caractérisé en ce que les moyens amont (152) d'embrayage comprennent un organe de commande (154) relié aux moyens de liaison (78), déplaçable, par coopération avec une came amont fixe (162) disposée à l'extrémité amont du trajet de la chaîne d'entraînement (46), depuis une position de débrayage des moyens de liaison (78), vers une position d'embrayage de ces moyens de liaison (78), dans laquelle ils sont maintenus par les moyens de verrouillage (142).

13. Dispositif selon la revendication 12, caractérisé en ce que la came amont (162) est déplaçable entre une position active dans laquelle elle est destinée à coopérer avec l'organe de commande (154), et une position escamotée dans laquelle elle est écartée de l'organe de commande (154), si bien que le tonneau (24) n'est pas entraîné en rotation entre les extrémités amont et aval du trajet de la chaîne d'entraînement (46).

14. Dispositif selon la revendication 13, caractérisé en ce qu'il comporte des moyens de détection de la présence d'une charge sur le chariot (12) commandant l'escamotage de la came amont (162) lorsque le chariot (12) est vide.

15. Dispositif selon l'une quelconque des revendications 6 à 14, caractérisé en ce qu'il comporte des moyens aval (88) de débrayage des moyens de liaison (78), destinés à être actionnés lorsque le chariot (12) est à une extrémité aval du trajet de la chaîne d'entraînement (46), le tonneau (24) étant dans une position angulaire prédéterminée.

16. Dispositif selon la revendication 15, caractérisé en ce que les moyens aval (88) de débrayage comprennent un levier de commande (106) relié aux moyens de liaison (78) par une tringlerie (108), déplaçable, par coopération avec une butée (112) d'arrêt en rotation du tonneau (24), solidaire de ce tonneau, depuis une position d'embrayage des moyens de liaison (78), vers une position de débrayage de ces moyens de liaison (78), et un organe (90A) d'escamotage du levier (106), déplaçable, par coopération avec une came aval fixe (110) disposée à une extrémité aval du trajet de la chaîne d'entraînement (46), depuis une position d'écartement du levier (106) de la trajectoire décrite par la butée (112) lorsque le tonneau (24) tourne, vers laquelle l'organe d'escamotage (90A) est sollicité élastiquement, vers une position d'intersection du levier (106) et de cette trajectoire.

17. Dispositif selon la revendication 1 ou 2, caractérisé en ce que les seconds moyens d'entraînement comprennent un moteur (161) porté par le chariot (12), des contacts électriques (164) portés par le chariot (12) étant destinés à glisser le long de rails fixes conducteurs (166) de manière à alimenter électriquement le moteur (161) et à transmettre des informations de commande de ce moteur (161) et d'arrêt du tonneau (24) dans une position angulaire prédéterminée.

18. Dispositif selon l'une quelconque des revendications précédentes, caractérisé en ce qu'il comporte des moyens (114) de blocage du tonneau (24) dans une position angulaire prédéterminée.

19. Dispositif selon la revendication 18, caractérisé en ce que les moyens de blocage comprennent des moyens complémentaires de verrouillage (118,119) portés par le tonneau (24) et par une première extrémité d'une tige radiale (116) portée par l'embase (14), la seconde extrémité (120) de la tige (116) coopérant avec le contour d'un excentrique rotatif (122) vers lequel cette seconde extrémité est rappelée élastiquement, de manière à déplacer la tige (116) entre une position active de verrouillage du tonneau (24) et une position escamotée de libération du tonneau (24), le point P du contour de l'excentrique (122) le plus éloigné de l'axe de rotation de ce dernier étant, lorsque la tige (116) est dans sa position de verrouillage, interposé angulairement entre la seconde extrémité de la tige (116) et une butée (132) de fin de course.

20. Dispositif selon la revendication 19, caractérisé en ce que l'excentrique (122) est entraîné en rotation par une crémaillère (128) engrenant avec un pignon (130) solidaire de l'excentrique (122), la crémaillère (128) étant actionnée dans des sens opposés par un vérin (136) de blocage en rotation du tonneau (24) et par un vérin (134) de libération du tonneau (24), les deux vérins (134,136) étant fixes, espacés entre eux le long du trajet de manutention, disposés de part et d'autre des bords latéraux de ce trajet, et destinés à coopérer avec la crémaillère (128) lorsque leur tige (138,140) est alignée avec cette crémaillère.

21. Dispositif selon l'une quelconque des revendications précédentes, caractérisé en ce que le tonneau (24) comprend deux couronnes (26,28) entretoisées, coaxiales longitudinalement, le contour de chaque couronne étant en appui sur deux galets rotatifs (32) portés par l'embase (14), un châssis (34) formant support pour la charge, solidaire des couronnes (26,28), des moyens (36) de chargement/déchargement de la charge sur le support (34) et des moyens (38) d'accrochage de cette charge sur le support (34).

22. Dispositif selon la revendication 21, caractérisé en ce que les moyens de chargement/déchargement de la charge comprennent un chemin roulant (36) porté par le support (34), destiné à coopérer par contact avec les patins d'une luge de manutention sur laquelle est fixée la charge.

23. Dispositif selon la revendication 21, caractérisé en ce que les moyens de chargement/déchargement de la charge comprennent un chemin roulant (36A) disposé à poste fixe sur le trajet de manutention, déplaçable entre une position active sensiblement au niveau du support (34), dans laquelle le chemin roulant (36A) est destiné à coopérer par contact avec les patins d'une luge de manutention sur laquelle est fixée la charge, et une position d'attente écartée du support (34).

24. Dispositif selon la revendication 22 ou 23, caractérisé en ce que les moyens d'accrochage de la charge sur le support (34) comprennent des moyens (38) de blocage des patins de la luge sur le support (34).

25. Dispositif selon l'une quelconque des revendications précédentes, caractérisé en ce que la charge comprend une caisse de véhicule automobile, le trajet de manutention étant agencé dans une ligne de fabrication de ce véhicule.

26. Dispositif selon la revendication 25, caractérisé en ce que la partie du trajet de manutention dans laquelle s'étend la chaîne d'entraînement en rotation du tonneau est agencée à l'intérieur d'une étuve (168).

## Claims

1. Device for handling a load (K), of the type comprising a carriage (12) for transporting the load, including a base (14) displaceable in translation along a handling track, and a framework (24) of generally cylindrical shape, on which the load is intended to be fastened, mounted so as to be rotatable about its axis on the base (14), characterized in that the framework forms a one-piece barrel (24), the handling device additionally including first drive means (16, 18) for the base (14) and second drive means (46, 54; 161) for the barrel (24), the first and second drive means being actuated independently of one another so as to permit independent displacement, respectively in translation and in rotation, of the load (K) carried by the barrel (24).

2. Device according to Claim 1, characterized in that the first drive means comprise a conveyor means (16) forming a conveyor path, defining the handling track and co-operating by contact with longitudinal skids (18) of the base (14).

3. Device according to Claim 1 or 2, characterized in that the second drive means comprise an endless chain (46) for driving the barrel in rotation, extending along at least a part of the handling track, and intended to co-operate with a drive pinion (54) carried by the carriage (12) and coupled to the barrel (24).

4. Device according to Claims 2 and 3 taken together, characterized in that the drive chain (46) is coupled to the housing (70) of a differential (68), the two planetary gears (P1, P2) of which are coupled respectively to a drive motor (56) for the carriage conveyor means (16) and to a motor (64) for driving the drive chain (46), so that when the drive motor (64) for the chain (46) is at a standstill, the speeds of displacement of the conveyor means (16) and of the chain (46) are identical.

5. Device according to Claims 2 and 3 taken together, characterized in that the carriage conveyor means and the drive chain (46) are coupled respectively to two drive motors (56, 64) by separate means.

6. Device according to any one of Claims 3 to 5, characterized in that the drive pinion (54) is coupled to the barrel (24) by disengageable connection means (78).

7. Device according to Claim 6, characterized in that the connection means (78) are resiliently urged into the engaged position.

8. Device according to Claim 7, characterized in that it includes upstream means (86) for disengagement of the connection means (78), intended to be actuated when the carriage (12) is at an upstream end of the path of the drive chain (46), prior to the meshing of the drive pinion (54) with the chain (46).

9. Device according to Claim 8, characterized in that the upstream disengagement means (86) comprise a control device (90) connected to the connection means (78) by a rod assembly (96) displaceable, by co-operation with a fixed upstream cam (98) arranged at the upstream end of the path of the chain (46), from a position of engagement of the connection means (78), towards which position it is resiliently urged, to a position of disengagement of the connection means (78).

10. Device according to Claim 6, characterized in that it includes means (142) for locking the connection means (78) selectively in the engaged position and in the disengaged position.

11. Device according to Claim 10, characterized in that it includes upstream means (152) for engagement of the connection means (78), intended to be actuated when the carriage (12) is at an upstream end of the path of the drive chain (46) and as a consequence of the idle meshing of the drive pinion (54) with the chain (46).

12. Device according to Claim 11, characterized in that the upstream engagement means (152) comprise a control device (154) connected to the connection means (78) displaceable, by co-operation with a fixed upstream cam (162) arranged at the upstream end of the path of the drive chain (46), from a position of disengagement of the connection means (78) to a position of disengagement of the connection means (78), in which they are maintained by the locking means (142).

13. Device according to Claim 12, characterized in that the upstream cam (162) is displaceable between an active position in which it is intended to co-operate with the control device (154) and a retracted position in which it is distanced from the control device (154), so that the barrel (24) is not driven in rotation between the upstream and downstream ends of the path of the drive chain (46).

14. Device according to Claim 13, characterized in that it includes means for detecting the presence of a load on the carriage (12) controlling the retraction of the upstream cam (162) when the carriage (12) is empty.

15. Device according to any one of Claims 6 to 14, characterized in that it includes downstream means (88) for disengagement of the connection means (78), intended to be actuated when the carriage (12) is at a downstream end of the path of the drive chain (46), the barrel (24) being in a predetermined angular position.

16. Device according to Claim 15, characterized in that the downstream disengagement means (88) comprise a control lever (106) connected to the connection means (78) by a rod assembly (108) displaceable, by co-operation with a stop (112) for arresting the barrel (24) in rotation, integral with the barrel, from a position of engagement of the connection means (78), to a position of disengagement of the connection means (78), and a device (90A) for retraction of the lever (106) displaceable, by co-operation with a fixed downstream cam (110) arranged at a downstream end of the path of the drive chain (46), from a position in which the lever (106) is distanced from the trajectory described by the stop (112) when the barrel (24) rotates, towards which position the retraction device (90A) is resiliently urged, to a position of intersection of the lever (106) and that trajectory.

17. Device according to Claim 1 or 2, characterized in that the second drive means comprise a motor (161) carried by the carriage (12), electrical contacts (164) carried by the carriage (12) being intended to slide along fixed conductor rails (166) so as to provide electric power to the motor (161) and to transmit data for controlling the motor (161) and for arresting the barrel (24) in a predetermined angular position.

18. Device according to any one of the preceding claims, characterized in that it includes means (114) for blocking the barrel (24) in a predetermined angular position.

19. Device according to Claim 18, characterized in that the blocking means comprise complementary locking means (118, 119) carried by the barrel (24) and by a first end of a radial rod (116) carried by the base (14), the second end (120) of the rod (116) co-operating with the contour of a rotary eccentric (122) towards which the second end is resiliently urged, so as to displace the rod (116) between an active position for locking of the barrel (24) and a retracted position for liberation of the barrel (24), the point P of the contour of the eccentric (122) furthest from the axis of rotation of the latter being, when the rod (116) is in its locking position, interposed at an angle between the second end of the rod (116) and an end of travel stop (132).

20. Device according to Claim 19, characterized in that the eccentric (122) is driven in rotation by a rack (128) meshing with a pinion (130) integral with the eccentric (122), the rack (128) being actuated in opposite directions by a jack (136) for blocking the rotation of the barrel (24) and by a jack (134) for liberating the barrel (24), the two jacks (134, 136) being fixed, distanced from each other along the handling track, arranged on either side of the lateral edges of the track, and intended to co-operate with the rack (128) when their rod (138, 140) is aligned with the rack.

21. Device according to one of the preceding claims, characterized in that the barrel (24) comprises two braced rings (26, 28), longitudinally coaxial, the contour of each ring bearing on two rotary rollers (32) carried by the base (14), a chassis (34) forming a support for the load, integral with the rings (26, 28), means (36) for loading/unloading of the load on the support (34), and means (38) for fastening the load on the support (34).

22. Device according to claim 21, characterized in that the means for loading/unloading of the load comprise a conveyor path (36) carried by the support (34), intended to co-operate by contact with the skids of a handling sledge onto which the load is fixed.

23. Device according to Claim 21, characterized in that the means for loading/unloading of the load comprise a conveyor path (36A) arranged at a fixed station on the handling track, displaceable between an active position substantially at the level of the support (34), in which the conveyor path (36A) is intended to co-operate by contact with the skids of a handling sledge onto which the load is fastened, and a waiting position distanced from the support (34).

24. Device according to Claim 22 or 23, characterized in that the means for fastening the load onto the support (34) comprise means (38) for locking the skids of the sledge on the support (34).

25. Device according to any one of the preceding claims, characterized in that the load comprises a motor vehicle body, the handling track being arranged in a production line for the vehicle.

26. Device according to Claim 25, characterized in that the part of the handling track in which extends the chain for driving the barrel in rotation is arranged inside an oven (168).

## Patentansprüche

1. Vorrichtung zur Handhabung einer Last (K) mit einem Wagen (12) zur Beförderung dieser Last, der einen auf einem Handhabungsweg geradlinig beweglichen Sockel (14) und ein Gerüst (24) von allgemein zylindrischer Form aufweist, an dem die Last aufgehängt werden soll und das um seine Achse auf dem Sockel (14) drehbar montiert ist, dadurch gekennzeichnet, daß das Gerüst eine einstückige Trommel (24) bildet, wobei die Handhabungsvorrichtung außerdem erste Einrichtungen (16, 18) zum Antrieb des Sockels (14) und zweite Einrichtungen (46, 54; 161) zum Antrieb der Trommel (24) aufweist, wobei die ersten und zweiten Antriebseinrichtungen voneinander unabhängig aktiviert werden, so daß sie voneinander unabhängige geradlinige Bewegungen und Drehbewegungen der von der Trommel (24) getragenen Last (K) gestatten.

2. Vorrichtung nach Anspruch 1, dadurch gekennzeichnet, daß die ersten Antriebseinrichtungen einen eine Rollbahn bildenden Förderer (16) aufweisen, der den Handhabungsweg definiert und mit Längskufen (18) des Sockels (14) durch Kontakt zusammenwirkt.

3. Vorrichtung nach Anspruch 1 oder 2, dadurch gekennzeichnet, daß die zweiten Antriebseinrichtungen eine Endloskette (46) zum rotierenden Antrieb der Trommel aufweisen, die sich mindestens längs eines Teils des Handhabungswegs erstreckt und dazu bestimmt ist, mit einem von dem Wagen (12) getragenen und mit der Trommel (24) gekoppelten Antriebszahnrad (54) zusammenzuwirken.

4. Vorrichtung nach den Ansprüchen 2 und 3 zusammen, dadurch gekennzeichnet, daß die Antriebskette (46) mit dem Gehäuse (70) eines Differentials (68) gekoppelt ist, dessen beide Tellerräder (P1, P2) mit einem Motor (56) zum Antrieb des Wagenförderers (16) bzw. mit einem Motor (64) zum Antrieb der Antriebskette (46) gekoppelt sind, so daß die Bewegungsgeschwindigkeiten des Förderers (16) und der Kette (46) gleich sind, wenn der Motor (64) zum Antrieb der Kette angehalten ist.

5. Vorrichtung nach den Ansprüchen 2 und 3 zusammen, dadurch gekennzeichnet, daß der Wagenförderer und die Antriebskette (46) durch getrennte Einrichtungen mit zwei Antriebsmotoren (56, 64) gekoppelt sind.

6. Vorrichtung nach einem der Ansprüche 3 bis 5, dadurch gekennzeichnet, daß das Antriebszahnrad (54) mit der Trommel (24) durch eine auskuppelbare Verbindungseinrichtung (78) gekoppelt ist.

7. Vorrichtung nach Anspruch 6, dadurch gekennzeichnet, daß die Verbindungseinrichtung (78) in Richtung auf die eingekuppelte Stellung elastisch beaufschlagt ist.

8. Vorrichtung nach Anspruch 7, dadurch gekennzeichnet, daß sie eine eingangsseitige Einrichtung (86) zum Auskuppeln der Verbindungseinrichtung (78) besitzt, die dazu bestimmt ist, betätigt zu werden, wenn der Wagen (12) sich an einem eingangsseitigen Ende des Wegs der Antriebskette (46) befindet, und zwar vor dem Ineingriffkommen des Antriebszahnrads (54) mit der Kette (46)

9. Vorrichtung nach Anspruch 8, dadurch gekennzeichnet, daß die eingangsseitige Auskuppeleinrichtung (86) ein mit der Verbindungseinrichtung (78) durch ein Gestänge (96) verbundenes Steuerorgan (90) aufweist, das durch Zusammenwirken mit einem eingangsseitigen feststehenden Nocken (98), der am eingangsseitigen Ende des Wegs der Kette (46) angeordnet ist, aus einer Stellung, in der die Verbindungseinrichtung (78) eingekuppelt ist und in Richtung auf die er elastisch beaufschlagt wird, in eine Stellung beweglich ist, in der die Verbindungseinrichtung (78) ausgekuppelt ist.

10. Vorrichtung nach Anspruch 6, dadurch gekennzeichnet, daß sie eine Einrichtung (142) zur selektiven Verriegelung der Verbindungseinrichtung (78) in eingekuppelter und in ausgekuppelter Stellung aufweist.

11. Vorrichtung nach Anspruch 10, dadurch gekennzeichnet, daß sie eine eingangsseitige Einrichtung (152) zum Einkuppeln der Verbindungseinrichtung (78) besitzt, die dazu bestimmt ist, betätigt zu werden, wenn der Wagen (12) sich an einem eingangseitigen Ende des Wegs der Antriebskette (46) befindet, und zwar nach dem leeren Ineingriffkommen des Antriebszahnrads (54) mit der Kette (46).

12. Vorrichtung nach Anspruch 11, dadurch gekennzeichnet, daß die eingangsseitige Einkupplungseinrichtung (152) ein Steuerorgan (154) aufweist, das mit der Verbindungseinrichtung (78) verbunden ist und durch Zusammenwirken mit einem eingangsseitigen feststehenden Nocken (162), der am eingangsseitigen Ende des Wegs der Antriebskette (46) angeordnet ist, aus einer Stellung, in der die Verbindungseinrichtung (78) ausgekuppelt ist, in eine Stellung beweglich ist, in der diese Verbindungseinrichtung (78) eingekuppelt ist und in der sie durch die Verriegelungsenrichtung (142) gehalten ist.

13. Vorrichtung nach Anspruch 12, dadurch gekennzeichnet, daß der eingangseitige Nocken (162) zwischen einer aktiven Stellung, in der er mit dem Steuerorgan (154) zusammenwirken soll, und einer ausgerückten Stellung beweglich ist, in der er von dem Steuerorgan (154) entfernt ist, so daß die Trommel (24) zwischen dem eingangsseitigen und dem ausgangsseitigen Ende des Wegs der Antriebskette (46) nicht rotierend angetrieben wird.

14. Vorrichtung nach Anspruch 13, dadurch gekennzeichnet, daß sie eine Einrichtung zum Erfassen des Vorhandenseins einer Last auf dem Wagen (12) aufweist, die die Ausrückung des eingangsseitigen Nockens (162) auslöst, wenn der Wagen (12) leer ist.

15. Vorrichtung nach einem der Ansprüche 6 bis 14, dadurch gekennzeichnet, daß sie eine ausgangsseitige Einrichtung (88) zum Auskuppeln der Verbindungseinrichtung (78) aufweist, die dazu bestimmt ist, betätigt zu werden, wenn der Wagen (12) sich an einem ausgangsseitigen Ende des Wegs der Antriebskette (46) befindet, wobei die Trommel (24) sich in einer vorbestimmten Winkelstellung befindet.

16. Vorrichtung nach Anspruch 15, dadurch gekennzeichnet, daß die ausgangsseitige Auskuppeleinrichtung (88) einen Steuerhebel (106) aufweist, der mit der Verbindungseinrichtung (78) durch ein Gestänge (108) verbunden ist und durch Zusammenwirken mit einem mit der Trommel (24) fest verbundenen Anschlag (112) zum Unterbrechen der Drehung dieser Trommel (24) aus einer Stellung, in der die Verbindungseinrichtung (78) eingekuppelt ist, in eine Stellung beweglich ist, in der diese Verbindungseinrichtung (78) ausgekuppelt ist, sowie ein Organ (90A) zum Ausrücken des Hebels (106), das durch Zusammenwirken mit einem ausgangsseitigen feststehenden Nocken (110), der an einem ausgangsseitigen Ende des Wegs der Antriebskette (46) angeordnet ist, aus einer Stellung, in der der Hebel (106) von dem Weg entfernt ist, den der Anschlag (112) bei der Drehung der Trommel (24) beschreibt, und in Richtung auf die das Ausrückorgan (90A) elastisch beaufschlagt ist, in eine Stellung beweglich ist, in der der Hebel (106) diesen Weg schneidet.

17. Vorrichtung nach Anspruch 1 oder 2, dadurch gekennzeichnet, daß die zweiten Antriebseinrichtungen einen vom Wagen (12) getragenen Motor (161) aufweisen, wobei vom Wagen (12) getragene elektrische Kontakte (164) dazu bestimmt sind, auf feststehenden leitenden Schienen (166) zu gleiten, so daß sie den Motor (161) elektrisch versorgen und Informationen zur Steuerung dieses Motors (161) und zum Anhalten der Trommel (24) in einer vorbestimmten Winkelstellung übertragen.

18. Vorrichtung nach einem der vorhergehenden Ansprüche, dadurch gekennzeichnet, daß sie eine Einrichtung (114) zur Blockierung der Trommel (24) in einer vorbestimmten Winkelstellung aufweist.

19. Vorrichtung nach Anspruch 18, dadurch gekennzeichnet, daß die Blockiereinrichtung einander ergänzende Verriegelungseinrichtungen (118, 119) aufweist, die von der Trommel (24) und von einem ersten Ende einer von dem Sockel (14) getragenen radialen Stange (116) getragen sind, wobei das zweite Ende (120) der Stange (116) mit dem Umfang eines rotierenden Exzenters (122) zusammenwirkt, zu welchem dieses zweite Ende elastisch zurückgeholt wird, so daß die Stange (116) zwischen einer aktiven Stellung der Verriegelung der Trommel (24) und einer ausgerückten Stellung der Freigabe der Trommel (24) bewegt wird, wobei der von der Drehachse des Exzenters (122) am weitesten entfernte Punkt (P) des Umfangs des Exzenters (122) winkelmäßig zwischen dem zweiten Ende der Stange (116) und einem Endanschlag (132) angeordnet ist, wenn die Stange (116) sich in ihrer Verriegelungsstellung befindet.

20. Vorrichtung nach Anspruch 19, dadurch gekennzeichnet, daß der Exzenter (122) durch eine Zahnstange (128) rotierend angetrieben wird, die mit einem mit dem Exzenter (122) fest verbundenen Zahnrad (130) kämmt, wobei die Zahnstange (128) in entgegengesetzten Richtungen durch einen Zylinder (136) zur Blockierung der Drehung der Trommel (24) und durch einen Zylinder (134) zur Freigabe der Trommel (24) betätigt wird, wobei die beiden Zylinder (134, 136) feststehend sind, längs des Handhabungswegs voneinander entfernt sind, zu beiden Seiten der Seitenränder dieses Wegs angeordnet sind und dazu bestimmt sind, mit der Zahnstange (128) zusammenzuwirken, wenn ihre Stange (138, 140) mit dieser Zahnstange in Flucht ist.

21. Vorrichtung nach einem der vorhergehenden Ansprüche, dadurch gekennzeichnet, daß die Trommel (24) zwei koaxiale, in Längsrichtung verstrebte Kränze (26, 28), deren Umfang jeweils auf zwei von dem Sockel (14) getragenen rotierenden Rollen (32) aufliegt, ein einen Träger für die Last bildendes und mit den Kränzen (26, 28) fest verbundenes Chassis (34), eine Einrichtung zum Auf- und Abladen der Last auf den Träger (34) bzw. von diesem und eine Einrichtung (38) zum Aufhängen dieser Last an dem Träger (34) aufweist.

22. Vorrichtung nach Anspruch 21, dadurch gekennzeichnet, daß die Einrichtung zum Auf- und Abladen der Last eine von dem Träger (34) getragene Rollbahn (36) aufweist, die dazu bestimmt ist, mit den Kufen eines Handhabungsschlittens, auf dem die Last befestigt ist, durch Kontakt zusammenzuwirken.

23. Vorrichtung nach Anspruch 21, dadurch gekennzeichnet, daß die Einrichtung zum Auf- und Abladen der Last eine Rollbahn (36A) aufweist, die auf dem Handhabungsweg stationär angeordnet ist und zwischen einer aktiven Stellung im wesentlichen auf Höhe des Trägers (34), in der die Rollbahn (36A) mit den Kufen eines Handhabungsschlittens, auf dem die Last befestigt ist, durch Kontakt zusammenwirken soll, und einer vom Träger (34) entfernten Wartestellung beweglich ist.

24. Vorrichtung nach Anspruch 22 oder 23, dadurch gekennzeichnet, daß die Einrichtung zum Aufhängen der Last an dem Träger (34) eine Einrichtung (38) zum Blockieren der Kufen des Schlittens auf dem Träger (34) aufweist.

25. Vorrichtung nach einem der vorhergehenden Ansprüche, dadurch gekennzeichnet, daß die Last eine Kraftfahrzeugkarosserie umfaßt, wobei der Handhabungsweg in einer Fertigungslinie dieses Fahrzeugs angeordnet ist.

26. Vorrichtung nach Anspruch 25, dadurch gekennzeichnet, daß der Teil des Handhabungswegs, in dem sich die Kette zum rotierenden Antrieb der Trommel erstreckt, im Inneren einer Trockenkammer angeordnet ist.
